## Europäisches Patentamt

## European Patent Office

## Office européen des brevets

(19)

(11) Veröffentlichungsnummer: **0 178 289**
**B1**

(12) # EUROPÄISCHE PATENTSCHRIFT

(45) Veröffentlichungstag der Patentschrift:
**03.08.88**

(51) Int. Cl.⁴: **B 60 B 39/10,** B 61 C 15/10

(21) Anmeldenummer: **85890228.1**

(22) Anmeldetag: **19.09.85**

(54) **Streugerät.**

(30) Priorität: **24.09.84 AT 3025/84**

(43) Veröffentlichungstag der Anmeldung:
**16.04.86 Patentblatt 86/16**

(45) Bekanntmachung des Hinweises auf die Patenterteilung:
**03.08.88 Patentblatt 88/31**

(84) Benannte Vertragsstaaten:
**AT BE CH DE FR GB IT LI LU NL SE**

(56) Entgegenhaltungen:
**WO - A - 83/04397
DE - A - 2 841 936
DE - A - 3 237 763
FR - A - 1 456 746
US - A - 1 380 964
US - A - 2 154 340
US - A - 2 352 252**

(73) Patentinhaber: **Goldmann, Norbert, Am Goldenen Acker 40, D-3257 Springe 2 (DE)**
Patentinhaber: **Bartling, Werner, Schafswelde 5, D-3210 Elze 1 (DE)**

(72) Erfinder: **Goldmann, Norbert, Am Goldenen Acker 40, D-3257 Springe 2 (DE)**
Erfinder: **Bartling, Werner, Schafsweide 5, D-3210 Elze 1 (DE)**

(74) Vertreter: **Köhler-Pavlik, Johann, Dipl.-Ing., Margaretenplatz 5, A-1050 Wien (AT)**

ACTORUM AG

## Beschreibung

Die Erfindung betrifft ein zum Einbau in Fahrzeuge, insbesondere Lastkraftwagen, Bussen und schienengebundenen Fahrzeugen bestimmtes Streugerät, das auf der Grundlage des elektromechanischen Prinzips ausgebildet ist, um Streugut, insbesondere Sand oder andere Antirutschmaterialteilchen durch eine untere Austrittsöffnung des Gerätes unmittelbar vor die Räder des Fahrzeuges auszutragen, unter Verwendung einer antreibbaren, ummantelten Wurfwalze, deren Drehachse parallel zur Achse der Räder des Fahrzeugs ausgerichtet ist, wobei das Streugut über ein oberhalb der Wurfwalze angeordnetes und radial zur Drehachse derselben ausgerichtetes Streugutzufuhrrohr mit einer Dosiervorrichtung eingebracht und über eine Austrittsöffnung ausgetragen wird, die tangential zur Wurfwalze ausgerichtet ist.

Aus der DE-A-3 237 763 ist ein Streugerät dieser Art bekannt geworden, das eine mittels Hubmagneten betätigbare Dosierklappe im oberen Streugut-Zufuhrrotor und einen unmittelbaren Antrieb für eine ummantelte Wurfwalze in horizontaler Lage aufweist. Hierbei ist der Hubmagnet für die Dosierklappe um 90° gegenüber dem Antriebsmotor versetzt eingebaut. Die Wurfwalze, durch Rotorwelle, Kupplung und Motorwelle mit dem Antriebsmotor verbunden, ermöglicht ein konstantes Verstreuen des Streuguts aus der Austrittsöffnung. Ausserdem hat dieses Gerät den Vorteil, dass beim Abschalten des Gerätes gleichzeitig der Motor und der Hubmagnet vom Strom abgeschaltet wird, so dass kein neues Streugut zur Wurfwalze gelangt, sich dieses aber durch seine Trägheitskraft noch eine Zeitlang dreht, so dass das Streugut, das sich innerhalb der Walze befindet, noch ausgetragen wird und dadurch beim Anlaufen des Geräts nur eine geringe Kraft für das Ingangsetzen der Walze notwendig ist, wobei das Streugut in die sich bereits drehende leere Wurfwalze eingelassen wird. Schliesslich wird auch eine wesentliche Verschleissverminderung erzielt. Würde das restliche Streugut in der Wurfwalze verbleiben, könnte es sich zwischen den Schaufeln des Wurfrades und der umliegenden Wandung des Gehäuses verklemmen und beim neuerlichen Einschalten des Geräts während des Anlaufens des Wurfrades Beschädigungen an den Schaufeln des Wurfrades und der umliegenden Wandung des Gehäuses verursachen.

Der Nachteil dieses Streugerätes liegt in der Witterungsanfälligkeit, dem Platzverbrauch bei der Montage bedingt durch die versetzte Anordnung des Hubmagneten gegenüber dem Antriebsmotor und in der schlechten Vermischung bzw. Auflockerung des Streuguts.

Aufgabe der Erfindung liegt darin, ein Streugerät der eingangs erwähnten Art zu schaffen, das eine Witterungsbeständigkeit, eine bessere Vermischung bzw. Auflockerung des Streuguts und einen geringeren Platzbedarf bei der Montage aufweist, ohne jedoch auf die Vorteile des bekannten Gerätes zu verzichten.

Diese Aufgabe wird erfindungsgemäss durch die Merkmale des kennzeichnenden Teils des Anspruchs 1 gelöst.

Durch die aussermittige Wirbelkammer wird eine bessere Vermischung und Auflockerung ermöglicht. Das Gut wird in der Offenstellung der Dosiereinrichtung durch die Wurfwalze gegen die Prallfläche geschleudert und kommt dann in die Kammern zwischen den Schaufeln der Wurfwalze aufgelockert hinein, wodurch ebenfalls eine weitere Minderung des Verschleisses erzielt wird und auch die Antriebskraft nicht in der Grösse wie beim bekannten Gerät vorhanden sein muss. Das Gehäuse zum neuen Streugerät ist minimal gross, gegen Witterung und mechanische Zerstörung beständig.

Nach einem weiteren Merkmal der Erfindung ist die Dosiereinrichtung mittels eines Hubmagneten betätigbar und als Dosierschieber, Dosierklappe od. dgl. ausgebildet.

Nach einem weiteren Merkmal der Erfindung ist der Hubmagnet über dem Antriebsmotor angeordnet. Durch dieses Merkmal wird ein geringerer Platzbedarf bei der Montage erzielt.

Nach einem weiteren Merkmal der Erfindung ist der Dosierschieber in Führungen geführt, in denen oberhalb und allenfalls auch unterhalb des Schiebers ein Dichtstreifen vorgesehen ist. Das Vorhandensein der Dichtungen verhindert, dass Staubpartikel in die Schieberführung gelangen, wodurch die Magnetkraft klein gehalten werden kann, da keine Verschmutzung der Gleitflächen des Schiebers erfolgt, die eine Reibung verursachen könnte. Dies ist wichtig, da bei sämtlichen Fahrzeugen eine begrenzte Stromenergie vorhanden ist.

Nach einem weiteren Merkmal der Erfindung weist das die Wurfwalze umschliessende Gehäuse im unteren Bereich in Durchströmrichtung einen tangentialen Auslassschlitz mit anschliessender Streugutleiteinrichtung auf. Durch die Streugutleiteinrichtung wird das Streugut auf die Antriebsräder verteilt, wodurch eine bessere Haftung gegeben ist.

Weitere Einzelheiten der Erfindung werden anhand der Zeichnungen näher erläutert, in welchen Ausführungsbeispiele des erfindungsgemässen Streugerätes dargestellt sind. Es zeigen:

Fig. 1 einen Querschnitt des Streugerätes;

Fig. 2 einen Schnitt nach der Linie II–II der Fig. 1;

Fig. 3 eine Seitenansicht des Streugerätes beim Einbau an eine Sattelzugmaschine;

Fig. 4 eine Stirnansicht der Konstruktion nach Fig. 3;

Fig. 5 eine ähnliche Darstellung wie Fig. 4 mit der Anbauvorrichtung;

Fig. 6 den Anbau des Streugerätes an ein Schienenfahrzeug;

Fig. 7 das Streugerät mit der Streugutzuführung.

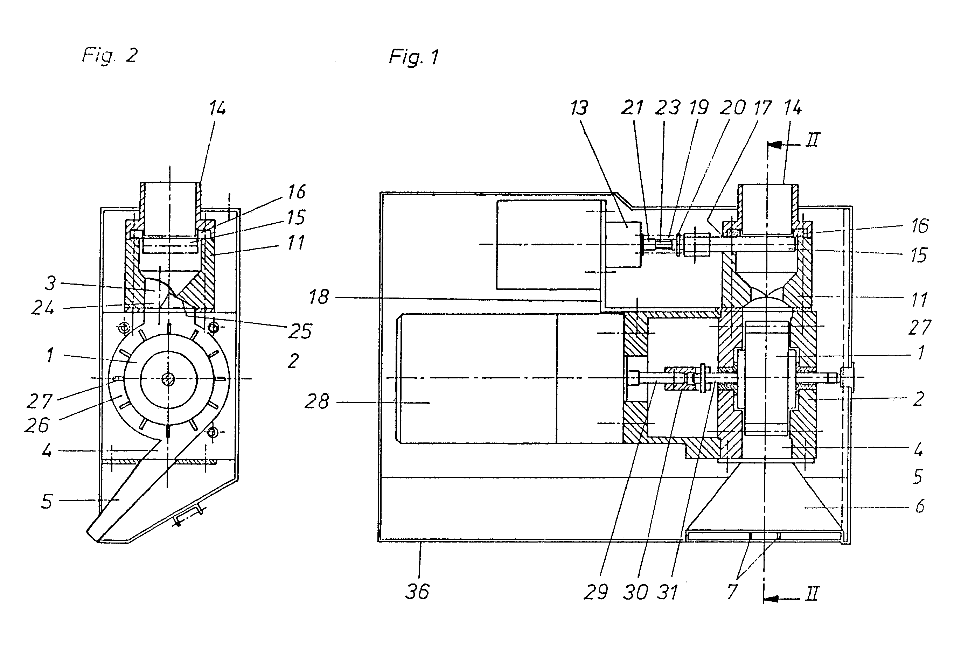

Das Streugerät besteht, wie die Fig. 1 und 2 zeigen, im wesentlichen aus einem ein elektromotorisch antreibbares, rotierendes Austragsorgan (Wurfwalze) 1 umschliessenden Gehäuse 2 mit einer oberen, gegen die Drehrichtung der Wurfwalze 1 vertikal aussermittig angeordneten Wirbelkammer 24 und einem unteren, in Durchströmrichtung tangentialen Auslassschlitz 4 mit anschliessender Streuguteinrichtung 5. Die Wirbelkammer 41 besitzt eine ebenfalls gegen die Drehrichtung der Wurfwalze 1 vertikal aussermittig ausgebildete Einlassöffnung 3.

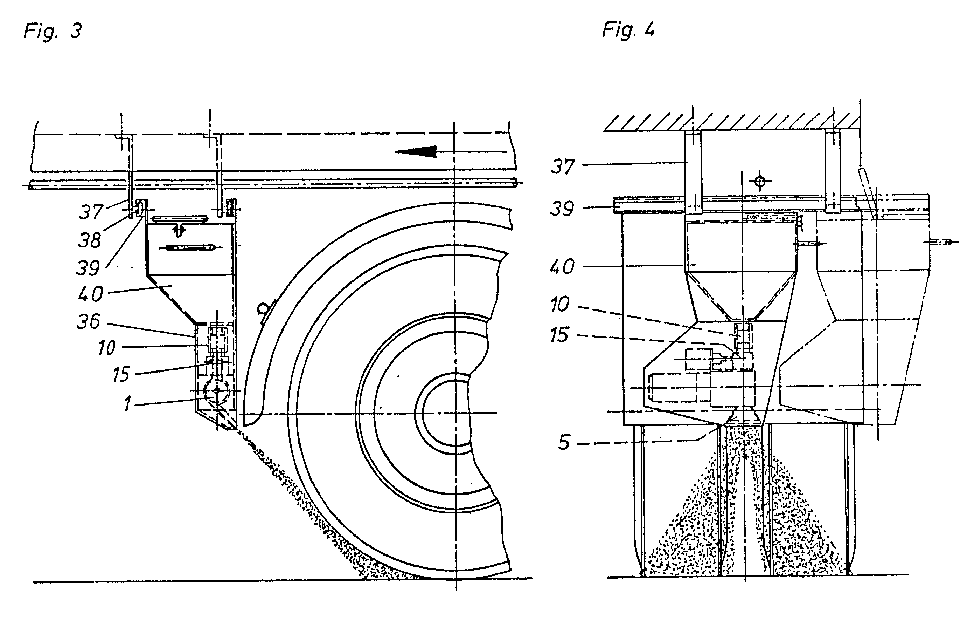

Der Streugutzulauf erfolgt, wie die Fig. 3 und 4 zeigen, von einem Streugutvorratsbehälter 40 über eine rohrförmige, elastische Schlauchverbindung 10 und einen Schlauchstutzen 14 (Fig. 3, 4, 6 und 7), zu einem über der oberen, aussermittigen Einlassöffnung 3 an einem geteilten Schiebergehäuse 11 befindlichen Sperrorgan, das aus einem mittels Hubmagneten 13 betätigbaren Dosierschieber 15 besteht. Bei der Ausführungsform des Gerätes nach den Fig. 1 und 2 ist lediglich der Schlauchstutzen 14 für den Anschluss des Schlauches 10 eingezeichnet.

Oberhalb und eventuell auch unterhalb des Schiebers 15 befindet sich ein Filz-Dichtstreifen 16 mit einer Abstreiffunktion von Staubpartikeln in den vorzugsweise vorhandenen Schieberführungen 17.

Ein Magnethaltewinkel 18 dient, um den Hubmagneten 13 in seiner Position zu halten. Ein Gabelstück 21 mit einem nicht dargestellten Stift verbindet eine Magnethubstange 23 mit dem Schieber 15 und auf der Magnethubstange 23 befindet sich eine Schraubendruckfeder 19, zum Schliessen des Schiebers 15, und eine Stellmutter 20, zum Verstellen der maximalen und minimalen Schieberöffnung. Die Kraft der Schraubendruckfeder 19 ist kleiner als die des Hubmagneten 13.

Unterhalb des Schiebers 15 gelangt das Streugut durch die vertikal entgegen der Wurfwalzendrehrichtung versetzte Einlassöffnung 3 in die Wirbelkammer 24, von wo aus es auf die Wurfwalze 1 in Zellen 26 zwischen Lamellen 27 gelangt. Durch die hohe Wurfwalzen-Umfangsgeschwindigkeit werden die Streugutteilchen mit annähernder Walzenumfangsgeschwindigkeit beschleunigt und tangential auf eine gegenüberliegende, den geschleuderten Streugutteilchen entgegengerichtete Prallfläche 25 der Wirbelkammer 24 abgelenkt, von diesen prallen die Streugutteilchen als aufgelockerter Materialstrom, bedingt durch entsprechende Schrägstellung der Prallflächen 25, mit fast unverminderter Geschwindigkeit in die Zellen der Wurfwalze 26, ohne ein Verklemmen zwischen Wurfwalzenlamellen 27 und Gehäuse 2 bzw. nennenswerten Verschleiss an diesen Teilen zu verursachen.

Die Wurfwalze 1 wird von einem Antriebsmotor 28, der über Motorwelle 29, Kupplung 30 und Rotorwelle 31, welche im Gehäuse 2 gelagert ist, mit der Wurfwalze 1 verbunden, angetrieben. Die Wurfwalze 1 leitet das Streugut bis zum Auslassschlitz 4 mit der anschliessenden Streumittelleiteinrichtung 5. Hierbei ist der Hubmagnet 13 über dem Antriebsmotor 28 in der Bewegungsrichtung des Dosierschiebers 15 angeordnet.

Nach Fig. 1 ist die Streugutleiteinrichtung 5 eine Breitschlitzdüse 6, in die zwei Leitlamellen 7 eingebracht sind. Diese Leitlamellen ermöglichen eine gleichmässige Streugutverteilung über die gesamte Streubreite.

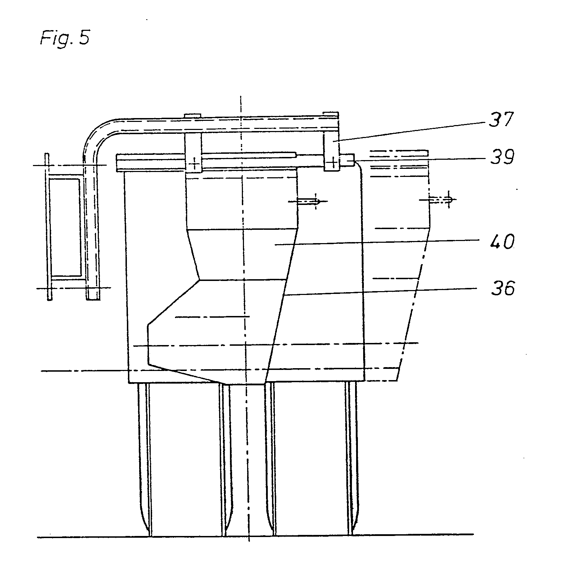

Fig. 3 und 4 zeigen die Gerätebefestigung durch Verschrauben der an einem Schutzgehäuse 36 angebrachten (nicht dargestellten) Montageplatte mit dem Fahrzeug. Hierbei ist nur eine kurze Schlauchverbindung vorgesehen. Die Materialzuführung erfolgt durch eine kurze flexible Schlauchleitung 10. Das Streugerät befindet sich unterhalb des Streugutvorratsbehälters 40 im gemeinsamen Schutzgehäuse 36 und ist mit diesem verschraubt. Das komplette Streugerät mit Vorratsbehälter wird mittels einer Haltevorrichtung üblicherweise unter den Fahrzeugaufbau bei Nutzfahrzeugen (siehe Fig. 5) montiert. Die Haltevorrichtung besteht aus zwei Führungsschienen 38, die horizontal angeordnet sind und vertikal stehenden Haltewinkeln 37. Zwei am oberen Teil des Schutzgehäuses 36 befindliche Führungsprofile 39 greifen über die Führungsschienen 38 der Haltevorrichtung. Das Streugerät wird durch einen Sicherungsbolzen gegen horizontales Verschieben auf den Führungsschienen 38 in Arbeitslage fixiert und gesichert. Durch Lösen des Sicherungsbolzens kann das komplette Streugerät schubladenähnlich unter dem Fahrzeug zum Befüllen mit Streugut oder zu Wartungszwecken hervorgezogen wird.

Fig. 5 zeigt ein universell einsetzbares Streugerät für Strassenfahrzeuge (hauptsächlich im Nutzfahrzeugbereich) mit integriertem Streugutvorratsbehälter 40 im Schutzgehäuse 36. Die Behälteraussenwände sind auf den Behälterinnenseiten mit Wärmedämmstoffen zur Vermeidung von Taupunktunterschreitungen bei sich rasch ändernden Aussentemperaturen beschichtet. Ausserdem ist mit gleicher Zielsetzung auf den trichterförmigen, im Inneren des Schutzgehäuses 36 liegenden Streugutvorratsbehälterwänden eine Parallelheizung in Dauerschaltung angeordnet.

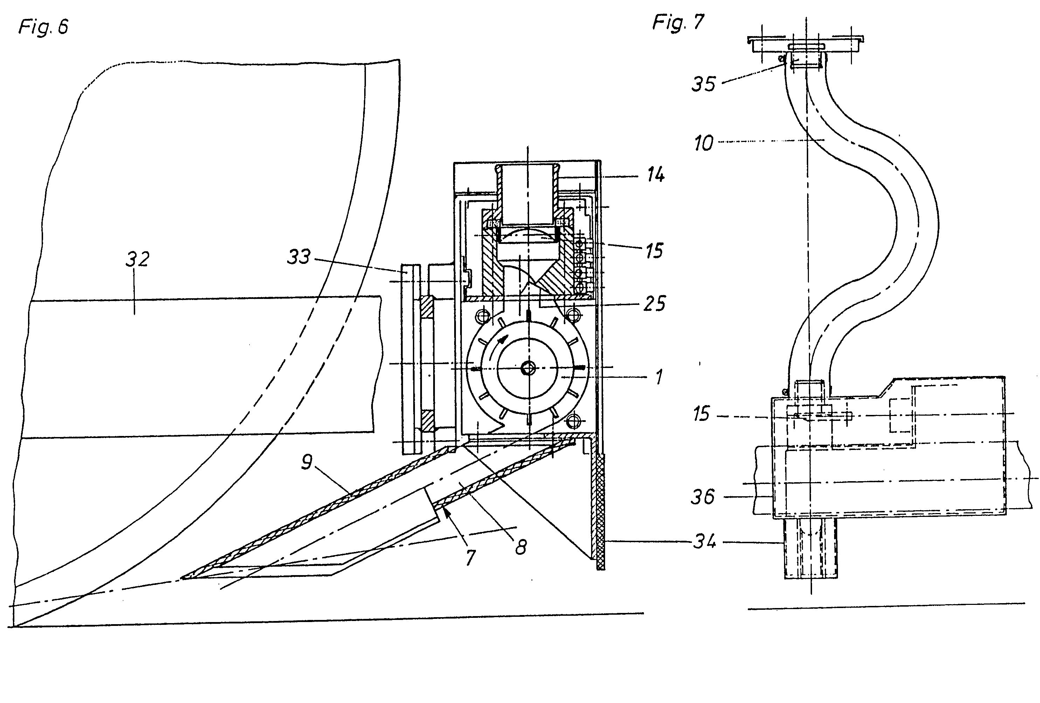

Die Fig. 6 zeigt ein Streugerät zum Einsatz für Schienenfahrzeuge mit externem Streugutvorratsbehälter, wobei üblicherweise die Streugutvorratsbehälter bei Schienenfahrzeugen im Fahrzeugboden integriert sind. Aufgrund der Schienenbreite erfolgt der Streugutauswurf durch eine Streugutleiteinrichtung 7, welche als Streurohr 8 ausgebildet ist, das mit einem elastischen Schutzmantel 9 überzogen ist.

Die Materialzuführung (siehe Fig. 7) erfolgt durch einen absperrbaren Doppelflansch 35, sowie eine flexible Polyesterschlauchleitung 10, mit Federstahldrahtverstärkung, die in der Lage ist, die Schwenkbewegungen des Fahrzeugradsatzes auszugleichen und dabei auch noch in extremen Situationen einen einwandfreien Streugutnachlauf sicherstellt.

Die Gerätebefestigung geschieht durch Verschrauben des Schutzgehäuses 36 mit dem am Fahrzeug befindlichen Bahnräumer 32 mittels einer Klemmplatte 33. Bedingt durch den niedrigen, in Radnähe befindlichen Anbauort ist das Schutzgehäuse 36 wasserdicht ausgeführt, und zur Vermeidung von Kondensat ist im Inneren des Schutzgehäuses 36 und des Streurohres 8 eine Parallelheizung in Dauerschaltung angebracht. Zusätzlich ist zum Schutz des Streurohres 8 gegen mechanische äussere Einwirkungen ein Streurohrschutz 34 angebracht (siehe Fig. 6 und 7).

**Patentansprüche**

1. Zum Einbau in Fahrzeuge, insbesondere Lastkraftwagen, Bussen und schienengebundenen Fahrzeugen, bestimmtes Streugerät, das auf der Grundlage des elektromechanischen Prinzips ausgebildet ist, um Streugut, insbesondere Sand oder andere Antirutschmaterialteilchen durch eine untere Austrittsöffnung des Gerätes unmittelbar vor die Räder des Fahrzeuges auszutragen, unter Verwendung einer antreibbaren, ummantelten Wurfwalze, deren Drehachse parallel zur Achse der Räder des Fahrzeuges ausgerichtet ist, wobei das Streugut über ein oberhalb der Wurfwalze angeordnetes und radial zur Drehachse derselben ausgerichtetes Streugutzufuhrrohr mit einer Dosiereinrichtung eingebracht und über eine Austrittsöffnung ausgetragen wird, die tangential zur Wurfwalze ausgerichtet ist, dadurch gekennzeichnet, dass zwischen der Dosiereinrichtung und der Wurfwalze (1) eine Wirbelkammer (24) angeordnet ist, in welche das Streugut über eine Einlassöffnung (3) gelangt, die entgegen der Drehrichtung der Wurfwalze aussermittig zur Achse des Streugutzufuhrrohrs (14; 10) angeordnet ist und dass die Wirbelkammer durch eine gegenüber der aussermittigen Einlassöffnung liegende schräge Prallfläche (25) begrenzt wird, die entgegen den von der Wurfwalze ausgeschleuderten Streugutteilchen ausgerichtet ist.

2. Streugerät nach Anspruch 1, dadurch gekennzeichnet, dass die Dosiereinrichtung mittels eines Hubmagneten betätigbar ist und als Dosierschieber (15), Dosierklappe oder dergleichen ausgebildet ist.

3. Streugerät nach den Ansprüchen 1 und 2, dadurch gekennzeichnet, dass der Hubmagnet (13) über dem Antriebsmotor (28) in der Bewegungsrichtung des Dosierschiebers (15) angeordnet ist.

4. Streugerät nach Anspruch 2, dadurch gekennzeichnet, dass der Dosierschieber (15) in Führungen (17) geführt ist, in denen oberhalb und allenfalls auch unterhalb des Schiebers (15) ein Dichtstreifen (16) vorgesehen ist.

5. Streugerät nach Anspruch 1, dadurch gekennzeichnet, dass das die Wurfwalze (1) umschliessende Gehäuse (2) im unteren Bereich einen in Durchströmrichtung tangentialen Auslassschlitz (4) mit anschliessender Streugutleiteinrichtung (5) aufweist.

6. Streugerät nach Anspruch 1, dadurch gekennzeichnet, dass der Hubmagnet (13) in seiner Position durch einen Magnethaltewinkel gehalten ist.

7. Streugerät nach Anspruch 2, dadurch gekennzeichnet, dass der Dosierschieber (15) durch ein federndes, als Schraubendruckfeder (19) ausgebildetes Element schliessbar ist, deren Kraft geringer als die des Hubmagneten (13) ist.

8. Streugerät nach Anspruch 1, dadurch gekennzeichnet, dass die Magnethubstange (23) mit dem Dosierschieber (15) durch ein Gabelstück (21) mit Stift (22) verbunden ist.

9. Streugerät nach Anspruch 5, dadurch gekennzeichnet, dass die Streugutleiteinrichtung (5) als Breitschlitzdüse (6) ausgebildet ist, in welche Leitlamellen (7) eingesetzt sind.

10. Streugerät nach Anspruch 1, dadurch gekennzeichnet, dass es unterhalb einem Streugutvorratsbehälter (40) in einem gemeinsamen Schutzgehäuse (36) angeordnet ist, wobei im Inneren desselben sowie im Inneren eines an das Gehäuse (2) der Wurfwalze (1) anschliessenden Streurohres (8) eine Heizung vorgesehen ist.

**Claims**

1. Scattering apparatus to be installed in vehicles, in particular road trucks, buses and railbound vehicles, designed on the basis of electromechanical principles in order to scatter particulate material, in particular sand or other anti-skid material particles through a lower outlet aperture of the apparatus directly ahead of the wheels of the vehicle with the aid of a driven, jacketed scattering roller having an axis of rotation parallel to the axis of the wheels of the vehicle, the material to be scattered being introduced by way of a feed pipe for the material positioned above the scattering roller and directed radially in respect of the axis of rotation of the latter, by means of a feed rate controlling device, to be discharged by way of a discharge aperture directed tangentially to the scattering roller, characterized in that between the feed rate controlling device and the scattering roller (1) a vortex chamber (24) is provided into which the material to be scattered enters by way of an inlet aperture (3) which, facing the direction of rotation of the scattering roller, is positioned eccentrically in relation to the axis of the feed pipe (14; 10) for the material and that the vortex chamber is defined by an inclined baffle surface (25), opposite to the eccentric inlet aperture and directed to face the particles of the material to be scattered being flung out by the scattering roller.

2. Scattering apparatus according to claim 1, characterized in that the rate control device is adapted to be operated by means of a lifting magnet and takes the form of a control slider (15), a control flap or the like.

3. Scattering apparatus according to claims 1 and 2, characterized in that the lifting magnet (13) is positioned above the drive motor (28) in the direction of movement of the control slider (15).

4. Scattering apparatus according to claim 2, characterized in that the control slider (15) is guided in guide formations (17) in which above and optionally also below the slider (15) a sealing strip (16) is provided.

5. Scattering apparatus according to claim 1, characterized in that the casing (2) which surrounds the scattering roller (1) comprises in its lower region a tangential discharge slot (4) in the direction of flow through the apparatus followed by a scattering material guide means (5).

6. Scattering apparatus according to claim 1, characterized in that the lifting magnet (13) is held in position by a magnet holder bracket.

7. Scattering apparatus according to claim 1, characterized in that the control slider (15) is adapted to be closed by a spring member in the form of a helical compression spring (19), the spring force of which is less than the force of the lifting magnet (13).

8. Scattering apparatus according to claim 1, characterized in that the magnet lifting rod (23) is connected to the control slider (15) by a fork member (21), including a pin (22).

9. Scattering apparatus according to claim 5, characterized in that the guide means (5) for the material to be scattered, takes the form of a wide slotted nozzle (6) into which lamellar guide members (7) have been inserted.

10. Scattering apparatus according to claim 1, characterized in that it is accommodated below a storage hopper (40) for the material to be scattered in a common protective casing (36), a heating means being provided inside thereof as well as inside a scattering tube (8) which follows onto the casing (2) of the scattering roller (1).

**Revendications**

1. Dispositif d'épandage destiné à être monté dans des véhicules, notamment des camions, bus et véhicules sur rails, conçu sur la base du principe électromécanique, afin de déverser immédiatement à l'avant des roues du véhicule un produit d'épandage, notamment du sable ou d'autres particules d'un matériau anti-dérapant, par un orifice de sortie placé à la partie inférieure du dispositif, par mise en œuvre d'un cylindre de projection entraîné, entouré d'une enveloppe, dont l'axe de rotation est parallèle à l'axe des roues du véhicule, le produit d'épandage étant introduit par un conduit d'alimentation disposé au-dessus du cylindre de projection, dirigé radialement par rapport à son axe de rotation et comportant un dispositif de dosage, et déversé par un orifice de sortie qui est dirigé tangentiellement par rapport au cylindre de projection, caractérisé en ce qu'il est disposé entre le dispositif de dosage et le cylindre de projection (1), une chambre à tourbillon (24) dans laquelle parvient le produit d'épandage, par un orifice excentré (3) qui est disposé, à l'encontre du sens de rotation du cylindre de projection excentré par rapport à l'axe du tube d'alimentation du produit d'épandage (14; 10) et en ce que la chambre à tourbillon est limitée par une surface de rebondissement (25) oblique qui est dirigée contre les particules de produit d'épandage projetées par le cylindre de projection.

2. Dispositif d'épandage selon la revendication 1, caractérisé en ce que le dispositif de dosage est actionné au moyen d'un aimant de levage et a la forme d'un tiroir de dosage (15), d'un clapet de dosage ou d'un organe similaire.

3. Dispositif selon les revendications 1 et 2, caractérisé en ce que l'aimant de levage (13) est disposé au-dessus du moteur d'entraînement (28), dans la direction de déplacement du tiroir de dosage (15).

4. Dispositif d'épandage selon la revendication 2, caractérisé en ce que le tiroir de dosage (15) est guidé dans des organes de guidage (17) dans lesquels il est prévu une bande d'étanchéité (16), au-dessus et en tout cas également au-dessous du tiroir (15).

5. Dispositif d'épandage selon la revendication 1, caractérisé en ce que le carter (2) entourant le cylindre de projection (1) comporte à la partie inférieure, une fente de sortie (4) tangentielle dans la direction d'écoulement, prolongée par un dispositif de guidage du produit d'épandage (5).

6. Dispositif d'épandage selon la revendication 1, caractérisé en ce que l'aimant de levage (13) est maintenu dans sa position par une équerre de fixation magnétique.

7. Dispositif d'épandage selon la revendication 2, caractérisé en ce que le tiroir de dosage (15) peut être fermé par un élément élastique ayant la forme d'un ressort de pression cylindrique (19), dont la force est inférieure à celle de l'aimant de levage (13).

8. Dispositif d'épandage selon la revendication 1, caractérisé en ce que la tige de levage magnétique (23) est reliée au tiroir de dosage (15) par une fourche (21) avec goupille (22).

9. Dispositif selon la revendication 5, caractérisé en ce que le dispositif de guidage du produit d'épandage (5) a la forme d'une buse à large fente (6) dans laquelle sont placéses des lamelles de guidage (7).

10. Dispositif d'épandage selon la revendication 1, caractérisé en ce qu'il est disposé au-dessous d'un réservoir de produit d'épandage (40) dans un carter de protection (36) commun, un chauffage étant prévu à l'intérieur de celui-ci ainsi qu'à l'intérieur d'un tube d'épandage (8) se raccordant au carter (2) du cylindre de projection (1).

Fig. 2

Fig. 1

0178289

Fig. 3

Fig. 4

37
38
39
40
36
10
15
1

37
39
40
10
15
5

0178289

*Fig. 5*

— 37
— 39

— 40

— 36

Fig. 7

Fig. 6